# EUROPÄISCHE PATENTSCHRIFT

(11) **EP 2 920 013 B1**
(45) Veröffentlichungstag und Bekanntmachung des Hinweises auf die Patenterteilung: **22.11.2017**
(21) Anmeldenummer: 13779173.7
(22) Anmeldetag: 10.10.2013
(51) Int. Cl.: B60K 6/48, B60K 6/365, B60K 6/387, B60W 10/113, B60W 10/02, B60W 10/06, B60W 10/08, B60W 20/00, F16H 3/00, F16H 3/72

(54) **VERFAHREN ZUM BETREIBEN EINER ANTRIEBSEINHEIT FÜR EIN HYBRIDFAHRZEUG**
METHOD FOR OPERATING A DRIVE UNIT FOR A HYBRID VEHICLE
PROCÉDÉ DE FONCTIONNEMENT D'UNE UNITÉ D'ENTRAINEMENT POUR UN VEHICULE HYBRIDE

(30) Priorität: 15.11.2012 DE 102012220829
(43) Veröffentlichungstag der Anmeldung: 23.09.2015
(73) Patentinhaber: ZF Friedrichshafen AG, 88046 Friedrichshafen (DE)
(72) Erfinder: KALTENBACH, Johannes, 88048 Friedrichshafen (DE); GRIESMEIER, Uwe, 88677 Markdorf (DE)
(86) Internationale Anmeldenummer: PCT/EP2013/071164
(87) Internationale Veröffentlichungsnummer: WO 2014/075852

(56) Entgegenhaltungen:
- DE-A1- 10 228 636
- DE-A1-102010 046 766
- DE-A1-102010 061 824
- US-A1- 2010 125 020

## Beschreibung

Die Erfindung betrifft ein Verfahren zum Betreiben einer Antriebseinheit für ein Hybridfahrzeug.

Aus der DE 10 2006 059 591 A1 ist eine Antriebseinheit für ein Hybridfahrzeug bekannt, wobei die Antriebseinheit ein Antriebsaggregat mit einem Verbrennungsmotor und einer elektrischen Maschine und ein zwischen das Antriebsaggregat und einen Abtrieb geschaltetes Getriebe umfasst. Das Getriebe ist als Doppelkupplungsgetriebe ausgeführt und umfasst mehrere Teilgetriebe. Die elektrische Maschine des Antriebsaggregats der Antriebseinheit ist über ein Planetengetriebe an eine Eingangswelle eines ersten Teilgetriebes und eine Eingangswelle eines parallel zum ersten Teilgetriebe geschalteten zweiten Teilgetriebes gekoppelt. Der Verbrennungsmotor ist über eine reibschlüssige Trennkupplung an die Eingangswelle des ersten Teilgetriebes koppelbar und bei geschlossener Trennkupplung direkt an die Eingangswelle eines der Teilgetriebe gekoppelt. Zum rein elektrische Fahren bei abgekoppeltem Verbrennungsmotor ist bei dieser Antriebseinheit in beiden Teilgetrieben jeweils ein Gang eingelegt ist, wobei die Trennkupplung geöffnet ist.

Aus der DE 10 2010 061 824 A1 ist weitere Antriebseinheit für ein Hybridfahrzeug bekannt, wobei sich die Antriebseinheit der DE 10 2010 061 824 A1 von der Antriebseinheit der DE 10 2006 059 591 A1 dadurch unterscheidet, dass zusätzlich ein formschlüssiges Überbrückungsschaltelement vorhanden ist, welches mit dem Planetengetriebe derart zusammenwirkt, dass bei geschlossenem Überbrückungsschaltelement eine drehfeste Verbindung zwischen der elektrischen Maschine, der Eingangswelle des ersten Teilgetriebes und der Eingangswelle des zweiten Teilgetriebes besteht, wohingegen bei geöffnetem Überbrückungsschaltelement diese Verbindung zwischen der elektrischen Maschine und den beiden Eingangswellen der beiden Teilgetriebe nicht besteht. Bei dieser Antriebseinheit kann auf drei unterschiedliche Arten rein elektrisch gefahren werden, nämlich dann, wenn in beiden Teilgetrieben jeweils ein Gang eingelegt ist und die Trennkupplung und das Überbrückungsschaltelement beide geöffnet sind, oder dann, wenn das Überbrückungsschaltelement geschlossen ist, die Trennkupplung geöffnet ist und im ersten oder zweiten Teilgetriebe ein Gang eingelegt ist und sich das jeweils andere Teilgetriebe in Neutral befindet.

Die beiden aus der DE 10 2006 059 591 A1 sowie DE 10 2010 061 824 A1 bekannten Antriebseinheiten verfügen über den Nachteil, dass zum Ankoppeln des Verbrennungsmotors aus einer rein elektrischen Fahrt heraus für den Verbrennungsmotor nur ein Gang zur Verfügung steht. Die DE 102 28 636 A1 offenbart ein Verfahren mit den Merkmalen des Oberbegriffs von Anspruch 1. In DE 10 2010 046766 A1 und US 2010/125020 A1 ist weiterer Stand der Technik offenbart.

Es besteht daher Bedarf an einem Verfahren zum Betreiben einer Antriebseinheit für ein Hybridfahrzeug, mit welchem zum Ankoppeln des Verbrennungsmotors aus einer rein elektrischen Fahrt heraus für den Verbrennungsmotor mehr Gänge zur Verfügung stehen.

Hiervon ausgehend liegt der vorliegenden Erfindung die Aufgabe zu Grunde, ein neuartiges Verfahren zum Betreiben einer Antriebseinheit für ein Hybridfahrzeug zu schaffen.

Diese Aufgabe wird durch ein Verfahren gemäß Patentanspruch 1 gelöst.

Mit Hilfe des erfindungsgemäßen Verfahrens stehen beim Ankoppeln des Verbrennungsmotors an den Abtrieb aus einer rein elektrischen Fahrt heraus mehrere Gänge für den Verbrennungsmotor zur Verfügung, und zwar abhängig von der Fahrgeschwindigkeit.

Durch das vom Verbrennungsmotor über die schlupfend betriebene Trennkupplung aufgebrachte Moment kann ein Schaltelement, welches bei rein elektrischer Fahrt geschlossen ist, entlastet und lastfrei ausgelegt werden. In diesem Fall entsteht dann eine Konfiguration eines sogenannten elektrodynamischen Anfahrelements, wobei dann Drehzahlvariabilität zwischen dem Verbrennungsmotor, der elektrischen Maschine und der Abtriebswelle des Getriebes besteht.

Nach dem Schließen der Trennkupplung kann eine Lastschaltung erfolgen, wie sie aus der DE 10 2010 061 824 A1 bekannt ist.

Dann, wenn bei rein elektrischer Fahrt in beiden Teilgetrieben jeweils ein Gang eingelegt ist, und wenn die Trennkupplung sowie das vorzugsweise vorhandene Überbrückungsschaltelement geöffnet ist, werden zum Ankoppeln des Verbrennungsmotors an den Abtrieb folgende Schritte durchgeführt: a) zunächst wird die Trennkupplung in Schlupf gebracht, um über das von derselben übertragene Moment in einem der beiden Teilgetriebe ein auszulegendes Schaltelement zu entlasten, wobei gleichzeitig das von der elektrischen Maschine bereitgestellte Moment angepasst wird, um das am Abtrieb wirksame Moment konstant zu halten; b) anschließend wird in einem der beiden Teilgetriebe das entlastete Schaltelement ausgelegt; c) darauffolgend wird der Schlupf an der Trennkupplung durch Absenkung der Drehzahl der elektrischen Maschine abgebaut, wobei gleichzeitig die Drehzahl des Verbrennungsmotors angepasst wird; d) anschließend wird die Trennkupplung geschlossen.

Dann, wenn bei rein elektrischer Fahrt in dem ersten Teilgetriebe ein Gang eingelegt ist, wenn sich das zweite Teilgetriebe in Neutral befindet, wenn die Trennkupplung geöffnet und das vorhandene Überbrückungsschaltelement geschlossen ist, werden zum Ankoppeln des Verbrennungsmotors an den Abtrieb folgende Schritte durchgeführt: a) zunächst wird die Trennkupplung in Schlupf gebracht, um über das von derselben übertragene Moment das Überbrückungsschaltelement zu entlasten, wobei gleichzeitig das von der elektrischen Maschine bereitgestellte Moment angepasst wird, um das am Abtrieb wirksame Moment konstant zu halten; b) anschließend wird das Überbrückungsschaltelement ausgelegt; c) darauffolgend wird das zweite Teilgetriebe auf einen zur Fahrtgeschwindigkeit passenden Gang mit Hilfe der elektrischen Maschine synchronisiert und nach Synchronisierung wird dieser Gang im zweiten Teilgetriebe eingelegt; d) anschließend wird an der elektrischen Maschine Last aufgebaut und an den Trennkupplung unter Konstanthaltung des am Abtrieb wirksamen Moments Last abgebaut, nämlich derart, dass über das erste Teilgetriebe keine Leistung mehr fließt, wobei dann der Gang des ersten Teilgetriebes ausgelegt wird; e) darauffolgend wird der Schlupf an der Trennkupplung durch Absenkung der Drehzahl der elektrischen Maschine abgebaut, wobei gleichzeitig die Drehzahl des Verbrennungsmotors angepasst wird; f) anschließend wird die Trennkupplung geschlossen.

Dann, wenn bei rein elektrischer Fahrt in dem zweiten Teilgetriebe ein Gang eingelegt ist, wenn sich das erste Teilgetriebe in Neutral befindet, wenn die Trennkupplung geöffnet und das vorhandene Überbrückungsschaltelement geschlossen ist, werden zum Ankoppeln des Verbrennungsmotors an den Abtrieb folgende Schritte durchgeführt: a) zunächst wird die Trennkupplung in Schlupf gebracht, um über das von derselben übertragene Moment das Überbrückungsschaltelement zu entlasten, wobei gleichzeitig das von der elektrischen Maschine bereitgestellte Moment angepasst wird, um das am Abtrieb wirksame Moment konstant zu halten; b) anschließend wird das Überbrückungsschaltelement ausgelegt; c) darauffolgend wird das erste Teilgetriebe auf einen zur Fahrtgeschwindigkeit passenden Gang mit Hilfe der elektrischen Maschine synchronisiert und nach Synchronisierung wird dieser Gang im ersten Teilgetriebe eingelegt, wobei gleichzeitig die Drehzahl des Verbrennungsmotors auf den zur Fahrtgeschwindigkeit passenden Gang angepasst wird; d) anschließend wird die Trennkupplung geschlossen.

Mit allen drei oben ausgeführten Verfahren kann in jeder Betriebssituation des rein elektrischen Fahrens der Verbrennungsmotor auch dann angekoppelt werden, wenn der aktuell im Getriebe eingelegte Gang für das Ankoppeln des Verbrennungsmotors nicht passen sollte.

Bevorzugte Weiterbildungen ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Schema einer ersten, erfindungsgemäß zu betreibenden Antriebseinheit für ein Hybridfahrzeug;
- Fig. 2: ein Schema einer zweiten, erfindungsgemäß zu betreibenden Antriebseinheit für ein Hybridfahrzeug;
- Fig. 3: ein Diagramm zur Verdeutlichung eines ersten erfindungsgemäßen Verfahrens zum Betreiben der Antriebseinheit gemäß Fig. 1 oder 2;
- Fig. 4: ein Diagramm zur Verdeutlichung eines zweiten erfindungsgemäßen Verfahrens zum Betreiben der Antriebseinheit gemäß Fig. 1 oder 2; und
- Fig. 5: ein Diagramm zur Verdeutlichung eines dritten erfindungsgemäßen Verfahrens zum Betreiben der Antriebseinheit gemäß Fig. 1 oder 2.

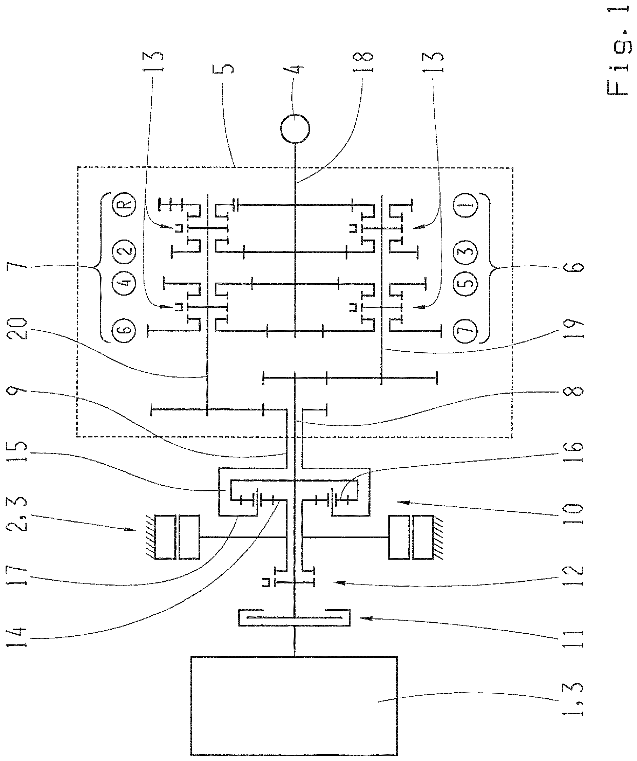

Fig. 1 zeigt ein Schema Antriebseinheit für ein Hybridfahrzeug. Die Antriebseinheit der Fig. 1 umfasst ein von einem Verbrennungsmotor 1 und einer elektrischen Maschine 2 gebildetes Antriebsaggregat 3, wobei zwischen das Antriebsaggregat 3 und einen Abtrieb 4 ein Getriebe 5 geschaltet ist. Das Getriebe 5 umfasst zwei Teilgetriebe 6 und 7, die sozusagen parallel zueinander geschaltet sind, wobei das erste Teilgetriebe 6 im gezeigten Ausführungsbeispiel die Vorwärtsgänge "1", "3", "5" und "7" bereitstellt, wohingegen das zweite Teilgetriebe 7 die Vorwärtsgänge "2", "4", "6" sowie den Rückwärtsgang "R" bereitstellt. Der in Fig. 1 gezeigte Radsatz der Teilgetriebe 6 und 7 und die gezeigte Aufteilung der Gänge auf dieselben ist exemplarischer Natur.

Zur Bereitstellung der Vorwärtsgänge sowie des Rückwärtsgangs umfassen die Teilgetriebe 6 und 7 des Getriebes 5 formschlüssige Schaltelemente 13, die auch als Gangschaltelemente bezeichnet werden. Der Aufbau und die Anordnung der Teilgetriebe 6 und 7 ist von Doppelkupplungsgetrieben bekannt und dem Fachmann geläufig.

Es sei lediglich darauf hingewiesen, dass jedes Teilgetriebe 6, 7 eine Eingangswelle 8, 9 umfasst, die abhängig vom Schaltzustand der Schaltelemente 13 selektiv über eine Ausgangswelle 18 mit dem Abtrieb 4 gekoppelt sind. Eine Eingangswelle 9 eines Teilgetriebes 7 ist als Hohlwelle ausgeführt, in welcher die andere Eingangswelle 8 des anderen Teilgetriebes 6 koaxial verläuft. Die Schaltelemente 13 der Teilgetriebe 6 und 7 sind Vorgelegewellen 19 und 20 der Teilgetriebe 6 und 7 zugeordnet.

Die elektrische Maschine 2 des Antriebsaggregats 3 greift an einer Eingangswelle 8 des ersten Teilgetriebes 6 und an einer Eingangswelle 9 des zweiten Teilgetriebes 7 über ein Planetengetriebe 10 an. An die Eingangswelle 8 des ersten Teilgetriebes 6 ist der Verbrennungsmotor 1 des Antriebsaggregats 3 über eine reibschlüssig Trennkupplung 11 direkt koppelbar, wobei bei geschlossener Trennkupplung 11 der Verbrennungsmotor 1 über das Platengetriebe 10 ferner an die Eingangswelle 9 des zweiten Teilgetriebes 7 indirekt gekoppelt ist.

Vom Planetengetriebe 10 sind in Fig. 1 ein Sonnenrad 14, ein Hohlrad 15, Planetenräder 16 sowie ein Steg bzw. Planetenträger 17 gezeigt. Der Planetenträger 17 greift an der Eingangswelle 9 des zweiten Teilgetriebes 7 an. Die elektrische Maschine 2 des Antriebsaggregats 3 ist an das Sonnenrad 14 des Planetengetriebes 10 gekoppelt. Der Verbrennungsmotor 1 ist bei geschlossener Trennkupplung 11 ebenso wie die Eingangswelle 8 des ersten Teilgetriebes 6 an das Hohlrad 15 gekoppelt.

Die Anbindung von Verbrennungsmotor 1, elektrischer Maschine 2 und zweitem Teilgetriebe 7 am Planetengetriebe 10 kann auch von der in Fig. 1 gezeigten Variante abweichen. So kann zum Beispiel die elektrische Maschine 2 am Hohlrad 15 und der Verbrennungsmotor 1 bei geschlossener Trennkupplung 11 ebenso wie die Eingangswelle 8 des ersten Teilgetriebes 6 am Sonnenrad 14 angreifen. Der Verbrennungsmotor 1 und die Eingangswelle 8 des ersten Teilgetriebes 6 greifen bei geschlossener Trennkupplung 11 immer an demselben Element des Planetengetriebes 10 an.

Mit dem Planetengetriebe 10 wirkt ein Überbrückungsschaltelement 12 derart zusammen, dass bei geschlossenem Überbrückungsschaltelement 12 eine drehfeste Verbindung zwischen der elektrischen Maschine 2, der Eingangswelle 9 des zweiten Teilgetriebes 7 und der Eingangswelle 8 des ersten Teilgetriebes 6 und damit zwingende Drehzahlgleichheit zwischen denselben besteht, wohingegen bei geöffnetem Überbrückungsschaltelement 12 diese drehfeste Verbindung zwischen der elektrischen Maschine 2 und den beiden Eingangswellen 8, 9 der beiden Teilgetriebe 6, 7 und damit die zwingende Drehzahlgleichheit nicht besteht. Beim Überbrückungsschaltelement 12 handelt es sich gemäß Fig. 1 um ein formschlüssiges Schaltelement.

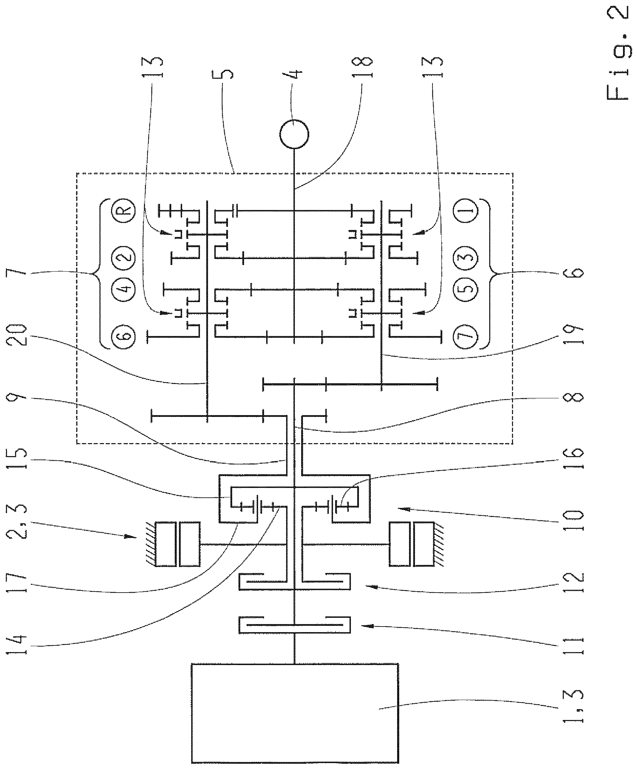

Fig. 2 zeigt eine Variante, in welcher das Überbrückungsschaltelement 12 als reibschlüssiges Schaltelement ausgeführt ist. Hinsichtlich aller übrigen Details stimmen Fig. 1 und 2 überein.

Bei den in Fig. 1 und 2 gezeigten Antriebseinheiten für ein Hybridfahrzeug kann auf drei unterschiedliche Art und Weisen rein elektrisch gefahren werden.

Ein erster Betriebsmodus für das rein elektrische Fahren kann derart erfolgen, dass in beiden Teilgetrieben 6 und 7 jeweils ein Gang eingelegt ist, so dass sowohl das Trennelement 11 als auch das Überbrückungsschaltelement 12 beide geöffnet sind. Hierbei ist dann im ersten Teilgetriebe 5 vorzugsweise ein sogenannter langer Gang, zum Beispiel der fünfte Gang, und im zweiten Teilgetriebe ein sogenannter kurzer Gang, zum Beispiel der zweite Gang, eingelegt, wobei dann die Eingangswelle 8 des ersten Teilgetriebes 6 eher langsam und die Eingangswelle 9 des zweiten Teilgetriebes 7 eher schnell dreht. Dadurch ergibt sich für die elektrische Maschine 2 über das Planetengetriebe 10 eine insgesamt hohe Übersetzung, wodurch ein hohes Anfahrmoment beim rein elektrischen Fahren möglich ist. Außerdem hat die Verwendung eines relativ langen Gangs im ersten Teilgetriebe den Vorteil, dass bei Ankoppeln des Verbrennungsmotors über die Trennkupplung wenig Rückwirkung am Abtrieb 4 zu spüren ist. für diesen Betriebsmodus ist das Überbrückungsschaltelement 12 optional.

Weiterhin kann bei den Antriebseinheiten der Fig. 1 und 2 in anderen Betriebsmodi dann rein elektrisch gefahren werden, wenn das Planetengetriebe 10 bei geschlossenem Überbrückungsschaltelement 12 überbrückt ist. So ist es möglich, dass bei geschlossenem Überbrückungsschaltelement 12 entweder im ersten Teilgetriebe 6 oder im zweiten Teilgetriebe 7 ein Gang eingelegt ist, wobei dann zum rein elektrischen Fahren bei geöffneter Trennkupplung 11 im jeweils anderen Teilgetriebe kein Gang eingelegt ist, so dass sich dann das jeweils andere Getriebe in Neutral befindet.

Um aus rein elektrischer Fahrt heraus den Verbrennungsmotor 1 an den Abtrieb 4 anzukoppeln, wird das vom Verbrennungsmotor 7 bereitgestellte Moment bei schlupfend betriebener Trennkupplung 11 übertragen und dazu genutzt, um ein bei elektrischer Fahrt ein zuvor geschlossenes Schaltelement zu entlasten und im entlasteten Zustand auszulegen.

Hierdurch entsteht dann für die Antriebseinheit die Konfiguration eines elektrodynamischen Anfahrelements, wobei dann Drehzahlvariabilität zwischen den Drehzahlen von Verbrennungsmotor 1, elektrischer Maschine 2 und Ausgangswelle 18 des Getriebes 5 besteht. Über eine nachfolgende Drehzahlanpassung an der elektrischen Maschine 2 kann dann der Schlupf an der Trennkupplung 11 wieder abgebaut werden, um die Wärmebelastung an der Trennkupplung 11 gering zu halten. Sobald die Trennkupplung 11 wieder haftet und demnach schlupffrei geschlossen ist, kann eine Lastschaltung, wie aus dem Stand der Technik bekannt, durchgeführt werden, um für den Verbrennungsmotor 1 einen zur Fahrgeschwindigkeit passenden Gang einzulegen. Für die Erfindung ist es demnach wesentlich, dass bei anfänglich geöffneter Trennkupplung 11 bei rein elektrischer Fahrt zum Ankoppeln des Verbrennungsmotors 1 die Trennkupplung 11 anfänglich im Schlupf betrieben wird und so vom Verbrennungsmotor 1 bereitgestelltes Moment überträgt, um ein Schaltelement, welches bei der rein elektrischen Fahrt geschlossen war, zu entlasten und im lastfreien Zustand auszulegen. Anschließend wird der Schlupf an der Trennkupplung 11 wieder abgebaut.

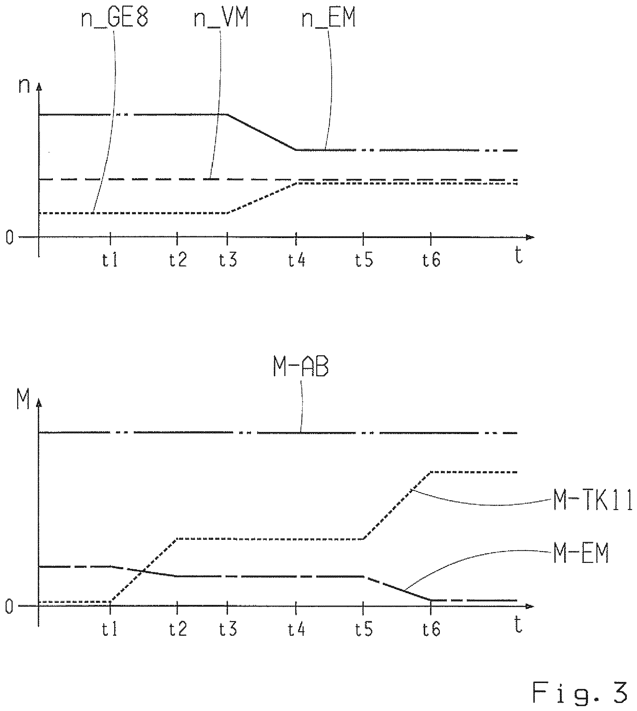

Nachfolgend wird unter Bezugnahme auf Fig. 3 bis 5 das Verfahren zum Ankoppeln des Verbrennungsmotors 1 an den Abtrieb 4 für die drei unterschiedlichen Fahrsituationen des rein elektrischen Fahrens im Detail beschrieben. So sind in Fig. 3 bis 5 unterschiedliche Verläufe von Drehzahlen n und Drehmomenten M gezeigt, nämlich ein zeitlicher Drehzahlverlauf n-EM der elektrischen Maschine 2, ein zeitlicher Drehzahlverlauf n-VM des Verbrennungsmotors 1, ein zeitlicher Drehzahlverlauf n-GE8 der Eingangswelle 8 des ersten Teilgetriebes 6, ein zeitlicher Drehzahlverlauf n-GE9 der Eingangswelle 9 des zweiten Teilgetriebes 7, ein zeitlicher Momentverlauf M-AB des am Abtrieb 4 wirksamen Moments, ein zeitlicher Momentverlauf M-EM des von der elektrischen Maschine 2 bereitgestellten Moments und ein zeitlicher Momentverlauf M-TK11 des von der Trennkupplung 11 übertragenen Moments.

Fig. 3 betrifft dabei die Fahrsituation des elektrischen Fahrens, in welcher sowohl im ersten Teilgetriebe 6 als auch im zweiten Teilgetriebe 7 jeweils ein Gang eingelegt ist, und wobei die Trennkupplung 11 und das Überbrückungsschaltelement 12 beide geöffnet sind.

Für das nachfolgend für diese Fahrsituation des elektrischen Fahrens beschriebene Verfahren ist das Überbrückungsschaltelement 12 optional, das heißt, dass das Überbrückungsschaltelement 12 für dieses Verfahren auch entfallen kann.

Im Ausgangszustand, nämlich in Fig. 3 vor dem Zeitpunkt t1, wird rein elektrisch gefahren. Hierzu ist dann in beiden Teilgetrieben 6 und 7 jeweils ein Gang eingelegt, vorzugsweise im ersten Teilgetriebe 6 eine langer Gang und im zweiten Teilgetriebe 7 ein kurzer Gang. Die Trennkupplung 11 ist geöffnet und das Überbrückungsschaltelement 12 ist ebenfalls geöffnet. Der Verbrennungsmotor 1 verfügt über eine Drehzahl n-VM, die größer als Null ist, woraus folgt, dass der Verbrennungsmotor 1 bereits läuft und demnach bereits zugestartet wurde. Zum rein elektrischen Fahren dreht die elektrische Maschine 2 mit der Drehzahl n-EM, wobei die elektrische Maschine 2 das Moment M-EM bereitstellt. Am Abtrieb 4 liegt das Moment M-AB an. Gemäß Fig. 3 ist vor dem Zeitpunkt t1 die Drehzahl n-GE8 der Eingangswelle 8 des ersten Teilgetriebes 6 zu gering, so dass der Verbrennungsmotor 1 nicht direkt angekoppelt werden kann.

Um nun aus dieser Fahrsituation des rein elektrischen Fahrens heraus den Verbrennungsmotor 1 an den Abtrieb 4 anzukoppeln, wird zunächst zwischen den Zeitpunkten t1 und t2 die reibschlüssige Trennkupplung 11 in Schlupf gebracht, und zwar durch Erhöhung des von der Trennkupplung 11 übertragbaren Moments, um über das von der Trennkupplung 11 übertragene Moment in einem der beiden Teilgetriebe 6 und 7 ein auszulegendes Schaltelement 13 zu entlasten. Hierbei wird gleichzeitig das von der elektrischen Maschine 2 bereitgestellte Moment M-EM angepasst, nämlich verringert, um das am Abtrieb wirksame Moment M-AB konstant zu halten. Zwischen den Zeitpunkten t1 und t2 wird vorzugsweise der Leistungsfluss über das erste Teilgetriebe 6 verringert und so das erste Teilgetriebe 6 lastfrei gemacht, so dass nachfolgend zwischen den Zeitpunkten t2 und t3 im ersten Teilgetriebe 6 der zuvor eingelegte Gang lastfrei ausgelegt werden kann. Darauffolgend wird zwischen den Zeitpunkten t3 und t4 der Schlupf an der Trennkupplung 11 abgebaut, nämlich durch Absenken der Drehzahl n-EM der elektrischen Maschine. Gleichzeitig erfolgt eine Anpassung der Drehzahl n- VM auf einen zur Fahrgeschwindigkeit passenden Gang, wobei in Fig. 3 die Drehzahl n-VM des Verbrennungsmotors 1 bereits passend ist. Nachfolgend wird die Trennkupplung 11 geschlossen.

Beginnend mit dem Zeitpunkt t4 liegt für die der Antriebseinheit die Konfiguration eines elektrodynamischen Anfahrelements vor, so dass demnach beginnend mit dem Zeitpunkt t4 eine aus dem Stand der Technik bekannte Lastschaltung erfolgen kann. Hierzu wird ein für den Verbrennungsmotor 1 passender, neuer Gang eingelegt, wobei Synchronbedingungen für den einzulegenden Gang insbesondere dann vorliegen, wenn die Trennkupplung 11 ins Haften kommt. Dieses Einlegen des neuen Gangs für den Verbrennungsmotor 1 erfolgt zwischen den Zeitpunkten t4 und t5, wobei alternativ auch das Überbrückungsschaltelement 12 synchronisiert und geschlossen werden kann, nämlich dann, wenn das Überbrückungsschaltelement 12 vorhanden ist und falls der aktuell im zweiten Teilgetriebe 7 eingelegte Gang besser für den Verbrennungsmotor 1 passt. Nachfolgend erfolgt zwischen den Zeitpunkten t5 und t6 gegebenenfalls eine Lastübernahme durch den Verbrennungsmotor 1, wobei dann das von der elektrischen Maschine 2 bereitgestellte Moment M-EM auf Null oder beliebig je nach Vorgabe einer Hybrid-Betriebsstrategie reduziert wird.

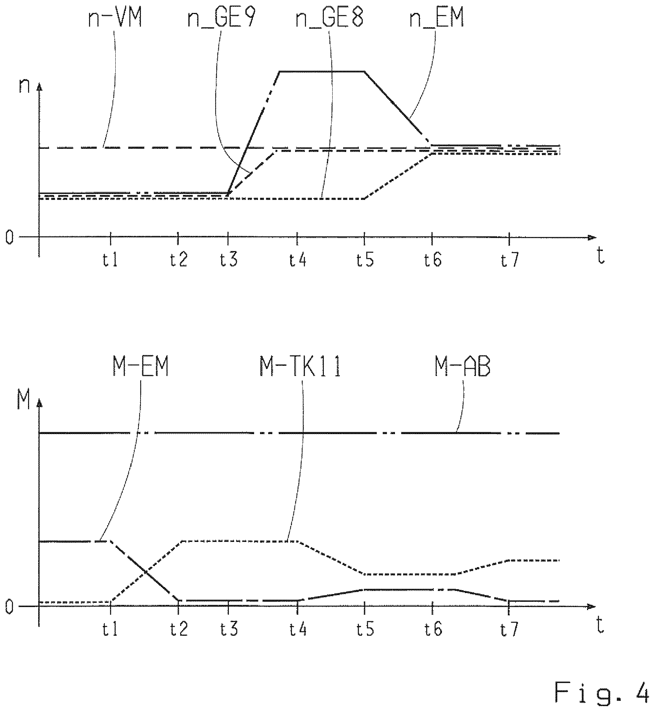

Fig. 4 betrifft eine Ausführungsvariante des erfindungsgemäßen Verfahrens, in welcher vor dem Zeitpunkt t1 derart rein elektrisch gefahren wird, dass im ersten Teilgetriebe 6 ein Gang eingelegt ist, zum Beispiel der fünfte Gang, dass sich das zweite Teilgetriebe 7 in Neutral befindet, die Trennkupplung 11 geöffnet und das nunmehr zwingend vorhandene Überbrückungsschaltelement 12 geschlossen ist. In Fig. 4 wird dabei davon ausgegangen, dass das Fahrerwunschmoment unverändert bleibt. Vor dem Zeitpunkt t1 ist der Verbrennungsmotor 1 bereits zugestartet, was daraus folgt, dass dessen Drehzahl n-VM größer als Null ist und oberhalb der Drehzahl n-GE8 und der Drehzahl n-GE9 der beiden Teilgetriebe 6 und 7. Daher kann der Verbrennungsmotor 1 nicht direkt an den Abtrieb 4 angekoppelt werden. Um nun aus dieser Fahrsituation des rein elektrischen Fahrens heraus den Verbrennungsmotor 1 an den Abtrieb 4 anzukoppeln, wird zunächst zwischen den Zeitpunkten t1 und t2 die Reibkupplung 11 durch Erhöhung des von derselben übertragbaren Moments M-TK11 in Schlupf gebracht, so dass von der Trennkupplung 11 Moment, welches der Verbrennungsmotor 1 bereitstellt, übertragen werden kann. Hierbei wird das von der elektrischen Maschine 2 bereitgestellte Moment M-EM gleichzeitig reduziert, so dass das Abtriebsmoment M-AB konstant bleibt. Dann, wenn die elektrische Maschine 2 momentfrei ist, ist auch das Überbrückungsschaltelement 12 momentfrei.

Zwischen den Zeitpunkten t2 und t3 kann anschließend das momentfreie Überbrückungsschaltelement 12 lastfrei geöffnet werden.

Nachfolgend erfolgt zwischen den Zeitpunkten t3 und t4 eine Synchronisation des zweiten Teilgetriebes 7 auf einen zur Fahrgeschwindigkeit passenden Gang, und zwar mit Hilfe der elektrischen Maschine 2, nämlich durch Erhöhung der Drehzahl n-EM der elektrischen Maschine. Nach erfolgter Synchronisation wird ebenfalls zwischen den Zeitpunkten t3 und t4 dieser Gang im zweiten Teilgetriebe 7 eingelegt, so zum Beispiel der zweite Gang.

Zwischen den Zeitpunkten t4 und t5 erfolgt nachfolgend ein Lastaufbau an der elektrischen Maschine 2 durch Erhöhung des von derselben bereitgestellten Moments M-EM und ein Lastabbau an der Trennkupplung 11 durch Verringerung des Moments M-TK11, wobei hierbei das Abtriebsmoment M-AB konstant bleibt. Über den Gang des ersten Teilgetriebes 6 fließt dann keine Leistung mehr, wobei dies dann der Fall ist, wenn die Momente von elektrischer Maschine 2 und Verbrennungsmotor 1 entsprechend der Standgetriebeübersetzung des Planetengetriebes 10 eingestellt sind.

Sobald das erste Teilgetriebe 6 lastfrei ist, wird zwischen den Zeitpunkten t4 und t5 der Gang im ersten Teilgetriebe 6 ausgelegt.

Darauffolgend wird zwischen den Zeitpunkten t5 und t6 der Schlupf an der Trennkupplung 11 abgebaut, nämlich durch Absenken der Drehzahl n-EM der elektrischen Maschine 2. Gleichzeitig erfolgt eine Anpassung n-VM der Drehzahl des Verbrennungsmotors 1, wobei im gezeigten Ausführungsbeispiel der Fig. 4 die Drehzahl n-VM des Verbrennungsmotors 1 bereits zu dem im zweiten Teilgetriebe 7 eingelegten Gang passt.

Anschließend erfolgt zwischen den Zeitpunkten t5 und t6 das Schließen der Trennkupplung 11.

Beginnend mit dem Zeitpunkt t6 liegt dann wiederum für die Antriebseinheit die Konfiguration eines elektrodynamischen Anfahrelements vor, so dass wie aus dem Stand der Technik bekannt eine Lastschaltung erfolgen kann.

Zwischen den Zeitpunkten t6 und t7 wird das Überbrückungsschaltelement 12 geschlossen, gegebenenfalls erfolgt eine Lastübernahme durch den Verbrennungsmotor 1 über die haftende Trennkupplung 11, eine Absenkung des von der elektrischen Maschine 2 bereitgestellten Moments M-EM auf Null oder auf einen von der Hybrid-Betriebsstrategie vorgegebenen Wert. Alternativ zum Schließen des Überbrückungsschaltelements 12 kann zwischen den Zeitpunkten t6 und t7 auch im ersten Teilgetriebe 6 ein neuer Gang synchronisiert und eingelegt werden.

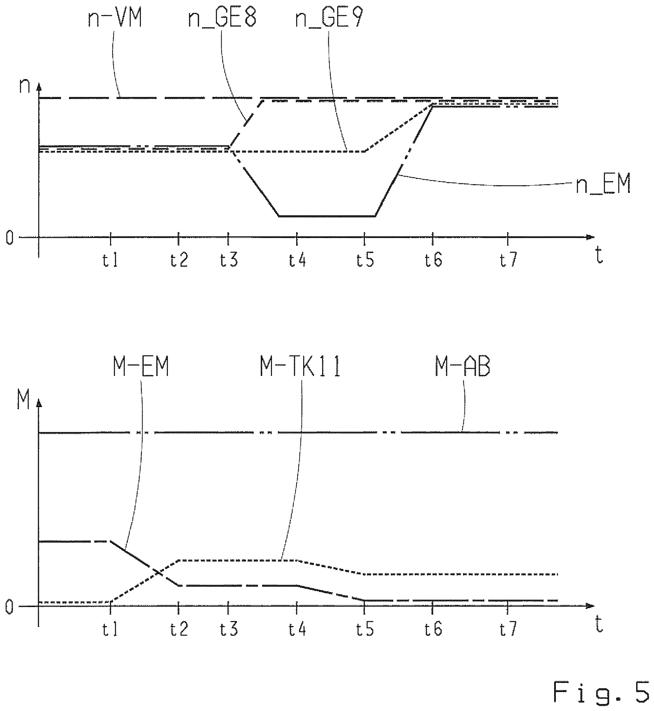

Fig. 5 verdeutlicht eine Variante des erfindungsgemäßen Verfahrens für den Fall, in welcher dadurch rein elektrisch gefahren wird, dass im zweiten Teilgetriebe 7 ein Gang eingelegt ist, zum Beispiel der sechste Gang, dass sich das erste Teilgetriebe 6 in Neutral befindet, dass das Überbrückungsschaltelement 12 geschlossen und die Trennkupplung 11 geöffnet ist. Ferner ist gemäß Fig. 5 im Ausgangszustand des rein elektrischen Fahrens vor dem Zeitpunkt t1 der Verbrennungsmotor 1 bereits zugestartet, so dass dessen Drehzahl n-VM demnach größer als Null ist und größer als die Drehzahlen n-GE8 und n-GE9 der beiden Eingangswellen 8 und 9 der beiden Teilgetriebe 6 und 7. Zum Zeitpunkt t1 kann der Verbrennungsmotor 1 demnach nicht direkt an den Abtrieb 4 angekoppelt werden.

Um nun aus dieser rein elektrischen Fahrt heraus den Verbrennungsmotor 1 an den Abtrieb 4 anzukoppeln, wird zunächst zwischen den Zeitpunkten t1 und t2 durch Erhöhung des von der Trennkupplung übertragbaren Moments m-TK11 die Trennkupplung in Schlupf gebracht, so dass dieselbe vom Verbrennungsmotor 1 bereitgestelltes Moment überträgt, wobei gleichzeitig das Moment M-EM der elektrischen Maschine 2 abgebaut wird, um das Abtriebsmoment M-AB konstant zu halten.

Die Momente von elektrischer Maschine 2 und Verbrennungsmotor 1 werden entsprechend der Standgetriebeübersetzung des Planetengetriebes 10 eingestellt, so dass dann das Überbrückungsschaltelement 12 lastfrei wird.

Anschließend wird zwischen den Zeitpunkten t2 und t3 das Überbrückungsschaltelement 12 lastfrei ausgelegt.

Darauffolgend erfolgt dann zwischen den Zeitpunkten t3 und t4 eine Synchronisation des ersten Teilgetriebes 6 auf einen zur Fahrgeschwindigkeit angepassten Gang, nämlich über Veränderung der Drehzahl n-EM der elektrischen Maschine 2. Nach erfolgter Synchronisation wird dieser Gang im ersten Teilgetriebe 6 eingelegt. Gleichzeitig erfolgt eine Anpassung der Drehzahl n-VM der elektrischen Maschine 1 an diesen Gang, wobei in Fig. 5 die Drehzahl n-VM des Verbrennungsmotors bereits für diesen Gang passend ist. Ferner wird zwischen den Zeitpunkten t3 und t4 die Trennkupplung 11 geschlossen.

Im Zeitpunkt t4 liegt dann wiederum für die Antriebseinheit die Konfiguration eines elektrodynamischen Anfahrelements vor, so dass auf aus dem Stand der Technik auf bekannte Art und Weise eine Lastschaltung unter Aufrechterhaltung des Antriebsmoments am Abtrieb 4 durchgeführt werden kann, insbesondere bei Lastübernahme durch den Verbrennungsmotor 1 und bei Lastabbau an der elektrischen Maschine 2. Eine solche Lastschaltung erfolgt zwischen den Zeitpunkten t4 und t5.

Zwischen den Zeitpunkten t5 und t6 wird dann der Gang im zweiten Teilgetriebe 7 ausgelegt, und durch Anpassung der Drehzahl n-EM an der elektrischen Maschine 1 wird das Planetengetriebe 10 in Blockumlauf gebracht. Dann, wenn das Planetengetriebe 10 zum Zeitpunkt t6 im Blockumlauf ist, kann zwischen den Zeitpunkten t6 und t7 das Überbrückungsschaltelement 12 geschlossen werden. Sowohl Verbrennungsmotor 1 als auch elektrische Maschine 2 sind dann mit einem passenden Gang an den Abtrieb angekoppelt.

In den Diagrammen der Fig. 3 bis 5 wurden Drehmomente, welche für Drehzahländerungen aufgrund von Trägheitsmassen erforderlich sind, der Einfachheit halber weggelassen.

Die Erfindung erlaubt demnach ein Ankoppeln des Verbrennungsmotors 1 aus rein elektrischer Fahrt heraus, wobei ohne Zugkraftunterbrechung ein zur Fahrgeschwindigkeit passender Gang für den Verbrennungsmotor 1 eingelegt werden kann.

### Bezugszeichen

- 1: Verbrennungsmotor
- 2: elektrische Maschine
- 3: Antriebsaggregat
- 4: Abtrieb
- 5: Getriebe
- 6: Teilgetriebe
- 7: Teilgetriebe
- 8: Eingangswelle
- 9: Eingangswelle
- 10: Platengetriebe
- 11: Trennkupplung
- 12: Überbrückungsschaltelement
- 13: Schaltelement
- 14: Sonnerad
- 15: Hohlrad
- 16: Platenrad
- 17: Platenträger
- 18: Ausgangswelle
- 19: Vorgelegewelle
- 20: Vorgelegewelle
- n: Drehzahl
- M: Moment
- t: Zeit

- n-EM: Drehzahlverlauf elektr. Maschine
- n-VM: Drehzahlverlauf Verbrennungsmotor
- n-GE8: Drehzahlverlauf Eingangswelle 8
- n-GE9: Drehzahlverlauf Eingangswelle 9
- M-AB: Momentverlauf Abtrieb
- M-EM: Momentverlauf elektr. Maschine
- M-TK11: Momentverlauf Trennkupplung 11
- t1 / t7: Zeitpunkt

## Patentansprüche

1. Verfahren zum Betreiben einer Antriebseinheit für ein Hybridfahrzeug, wobei die Antriebseinheit ein Antriebsaggregat (3) mit einem Verbrennungsmotor (1) und einer elektrische Maschine (2) und ein zwischen das Antriebsaggregat (3) und einen Abtrieb (4) geschaltetes, mehrere Teilgetriebe (6, 7) aufweisendes Getriebe (5) umfasst, wobei die elektrische Maschine (2) über ein Planentengetriebe (10) an eine Eingangswelle (8) eines ersten Teilgetriebes (6) und eine Eingangswelle (9) eines parallel zum ersten Teilgetriebe (6) geschalteten zweiten Teilgetriebes (7) gekoppelt ist, wobei der Verbrennungsmotor (1) über eine reibschlüssige Trennkupplung (11) an die Eingangswelle (8) des ersten Teilgetriebes (6) koppelbar und bei geschlossener Trennkupplung (11) zusammen mit der Eingangswelle (8) des ersten Teilgetriebes (6) an dasselbe Element (15) des Planentengetriebes (10) gekoppelt ist, , und wobei zum Ankoppeln des Verbrennungsmotors (1) an den Abtrieb (4) aus rein elektrischer Fahrt heraus das vom Verbrennungsmotor (1) bereitgestellte Moment über die schlupfend betriebene Trennkupplung (11) übertragen wird, um ein bei der rein elektrischen Fahrt zuvor geschlossenes Schaltelement zu entlasten und im entlasteten Zustand auszulegen, **dadurch gekennzeichnet, dass** hierzu die bei rein elektrischer Fahrt zuvor geöffnete Trennkupplung (11) zur Entlastung des auszulegenden Schaltelements in Schlupf gebracht wird, und dass nach dem Auslegen des zuvor geschlossenen und mit Hilfe der schlupfend betriebenen Trennkupplung (11) entlasteten Schaltelements die Trennkupplung (11) unter Abbau des Schlupfs an derselben geschlossen wird.

2. Verfahren nach Anspruch 1, **dadurch gekennzeichnet, dass** nach dem Schließen der Trennkupplung (11) im Getriebe (5) eine Lastschaltung ohne Zugkraftunterbrechung am Abtrieb (4) ausgeführt wird, um für den Verbrennungsmotor (1) einen zur Fahrgeschwindigkeit passenden Gang einzulegen.

3. Verfahren nach Anspruch 1 oder 2, **dadurch gekennzeichnet, dass** dann, wenn bei rein elektrischer Fahrt in beiden Teilgetrieben (6, 7) jeweils ein Gang eingelegt ist, und wenn die Trennkupplung (11) sowie das vorzugsweise vorhandene Überbrückungsschaltelement (12) geöffnet ist, zum Ankoppeln des Verbrennungsmotors (1) an den Abtrieb (4) folgende Schritte durchgeführt werden:
a) zunächst wird die Trennkupplung (11) in Schlupf gebracht, um über das von derselben übertragene Moment in einem der beiden Teilgetriebe ein auszulegendes Schaltelement (13) zu entlasten, wobei gleichzeitig das von der elektrischen Maschine (2) bereitgestellte Moment angepasst wird, um das am Abtrieb (4) wirksame Moment konstant zu halten;
b) anschließend wird in einem der beiden Teilgetriebe das entlastete Schaltelement (13) ausgelegt;
c) darauffolgend wird der Schlupf an der Trennkupplung (11) durch Absenkung der Drehzahl der elektrischen Maschine (2) abgebaut, wobei gleichzeitig die Drehzahl des Verbrennungsmotors (1) angepasst wird;
d) anschließend wird die Trennkupplung (11) geschlossen.

4. Verfahren nach Anspruch 1 oder 2, **dadurch gekennzeichnet, dass** mit dem Planetengetriebe (10) ein formschlüssiges oder reibschlüssiges, Überbrückungsschaitelement (12) derart zusammenwirkt, dass bei geschlossenem Überbrückungsschaltelement (12) eine drehfeste Verbindung zwischen der elektrischen Maschine (2) und den beiden Eingangswelle (8, 9) der beiden Teilgetriebe (6, 7) und damit zwingende Drehzahlgleichheit zwischen denselben besteht, wohingegen bei geöffnetem Überbrückungsschaltelement (12) diese drehfeste Verbindung zwischen der elektrischen Maschine (2) und den beiden Eingangswellen (8, 9) der beiden Teilgetriebe (6, 7) und damit die zwingende Drehzahlgleichheit nicht besteht, und dass dann, wenn bei rein elektrischer Fahrt in dem ersten Teilgetriebe (6) ein Gang eingelegt ist, wenn sich das zweite Teilgetriebe (7) in Neutral befindet, wenn die Trennkupplung (11) geöffnet und das Überbrückungsschaltelement (12) geschlossen ist, zum Ankoppeln des Verbrennungsmotors (1) an den Abtrieb (4) folgende Schritte durchgeführt werden:
a) zunächst wird die Trennkupplung (11) in Schlupf gebracht, um über das von derselben übertragene Moment das Überbrückungsschaltelement (12) zu entlasten, wobei gleichzeitig das von der elektrischen Maschine (2) bereitgestellte Moment angepasst wird, um das am Abtrieb (4) wirksame Moment konstant zu halten;
b) anschließend wird das Überbrückungsschaltelement (12) ausgelegt;
c) darauffolgend wird das zweite Teilgetriebe (7) auf einen zur Fahrtgeschwindigkeit passenden Gang mit Hilfe der elektrischen Maschine (2) synchronisiert und nach Synchronisierung wird dieser Gang im zweiten Teilgetriebe (7) eingelegt;
d) anschließend wird an der elektrischen Maschine (2) Last aufgebaut und an den Trennkupplung (11) unter Konstanthaltung des am Abtrieb (4) wirksamen Moments Last abgebaut, nämlich derart, dass über das erste Teilgetriebe (6) keine Leistung mehr fließt, wobei dann der Gang des ersten Teilgetriebes (6) ausgelegt wird;
e) darauffolgend wird der Schlupf an der Trennkupplung (11) durch Absenkung der Drehzahl der elektrischen Maschine (2) abgebaut, wobei gleichzeitig die Drehzahl des Verbrennungsmotors (1) angepasst wird;
f) anschließen wird die Trennkupplung (11) geschlossen.

5. Verfahren nach Anspruche 1 oder 2, **dadurch gekennzeichnet, dass** mit dem Planetengetriebe (10) ein formschlüssiges oder reibschlüssiges, Überbrückungsschaltelement (12) derart zusammenwirkt, dass bei geschlossenem Überbrückungsschaltelement (12) eine drehfeste Verbindung zwischen der elektrischen Maschine (2) und den beiden Eingangswellen (8, 9) der beiden Teilgetriebe (6, 7) und damit zwingende Drehzahlgleichheit zwischen denselben besteht, wohingegen bei geöffnetem Überbrückungsschaltelement (12) diese drehfeste Verbindung zwischen der elektrischen Maschine (2) und den beiden Eingangswellen (8, 9) der beiden Teilgetriebe (6, 7) und damit die zwingende Drehzahlgleichheit nicht besteht, und dass dann, wenn bei rein elektrischer Fahrt in dem zweiten Teilgetriebe (7) ein Gang eingelegt ist, wenn sich das erste Teilgetriebe (6) in Neutral befindet, wenn die Trennkupplung (11) geöffnet und das Überbrückungsschaltelement (12) geschlossen ist, zum Ankoppeln des Verbrennungsmotors (1) an den Abtrieb (4) folgende Schritte durchgeführt werden:
a) zunächst wird die Trennkupplung (11) in Schlupf gebracht, um über das von derselben übertragene Moment das Überbrückungsschaltelement (12) zu entlasten, wobei gleichzeitig das von der elektrischen Maschine (2) bereitgestellte Moment angepasst wird, um das am Abtrieb (4) wirksame Moment konstant zu halten;
b) anschließend wird das Überbrückungsschaltelement (12) ausgelegt;
c) darauffolgend wird das erste Teilgetriebe (6) auf einen zur Fahrtgeschwindigkeit passenden Gang mit Hilfe der elektrischen Maschine (2) synchronisiert und nach Synchronisierung wird dieser Gang im ersten Teilgetriebe (6) eingelegt, wobei gleichzeitig die Drehzahl des Verbrennungsmotors (1) auf den zur Fahrtgeschwindigkeit passenden Gang angepasst wird;
d) anschließend wird die Trennkupplung (11) geschlossen.

## Claims

1. Method for operating a drive unit for a hybrid vehicle, wherein the drive unit comprises a drive assembly (3) with an internal combustion engine (1) and an electric machine (2) and a transmission (5) which is connected between the drive assembly (3) and an output (4) and has a plurality of part transmissions (6, 7), wherein the electric machine (2) is coupled via a planetary gear mechanism (10) to an input shaft (8) of a first part transmission (6) and an input shaft (9) of a second part transmission (7) which is connected in parallel with the first part transmission (6), wherein the internal combustion engine (1) can be coupled via a frictionally locking clutch (11) to the input shaft (8) of the first part transmission (6), and when the clutch (11) is closed said internal combustion engine (1) is coupled together with the input shaft (8) of the first part transmission (6) to the same element (15) of the planetary gear mechanism (10), and wherein in order to couple the internal combustion engine (1) to the output (4) from purely electric travel the torque which is made available by the internal combustion engine (1) is transmitted via the clutch (11) which is operated in a slipping fashion in order to relieve a shift element which was previously closed during the purely electric travel and to disengage it in the relieved state, **characterized in that** for this purpose the clutch (11) which was previously opened during purely electric travel is placed in the slipping state in order to relieve the shift element which is to be disengaged, and **in that** after the disengagement of the previously closed shift element which was relieved using the clutch (11) which is operated in a slipping fashion the clutch (11) is closed while reducing the slip at said clutch (11).

2. Method according to Claim 1, **characterized in that** after the closing of the clutch (11) in the transmission (5) a load shift is executed without interruption in the tractive force at the output (4), in order to engage a gear speed which matches the velocity for the internal combustion engine (1).

3. Method according to Claim 1 or 2, **characterized in that** when a gear speed is respectively engaged in both part transmissions (6, 7) during purely electric travel and when the clutch (11) is opened and the preferably present lock-up shift element (12) is opened, the following steps are carried out in order to couple the internal combustion engine (1) to the output (4):
a) firstly the clutch (11) is placed in a slipping state in order to relieve, via the torque which is transmitted by said clutch (11), in one of the two part transmissions, a shift element (13) which is to be disengaged, wherein at the same time the torque which is made available by the electric machine (2) is adapted in order to keep the torque which is effective at the output (4) constant;
b) subsequently the shift element (13) which is relieved is disengaged in one of the two part transmissions;
c) after this the slip at the clutch (11) is reduced by lowering the rotational speed of the electric machine (2), wherein at the same time the rotational speed of the internal combustion engine (1) is adapted; and
d) subsequently the clutch (11) is closed.

4. Method according to Claim 1 or 2, **characterized in that** a positively locking or frictionally locking lock-up shift element (12) interacts with the planetary gear mechanism (10) in such a way that when the lock-up shift element (12) is closed a rotationally fixed connection is present between the electric machine (2) and the two input shafts (8, 9) of the two part transmissions (6, 7) and therefore obligatory equality of rotational speed is present between said input shafts (8, 9), whereas when the lock-up shift element (12) is opened this rotationally fixed connection is not present between the electric machine (2) and the two input shafts (8, 9) of the two part transmissions (6, 7) and therefore the obligatory equality of rotational speed is not present, and **in that** when a gear speed is engaged in the first part transmission (6) during purely electric travel when the second part transmission (7) is in neutral and when the clutch (11) is opened and the lock-up shift element (12) is closed, the following steps are carried out in order to couple the internal combustion engine (1) to the output (4) :
a) firstly the clutch (11) is placed in a slipping state in order to relieve the lock-up shift element (12) by means of the torque transmitted by said clutch (11), wherein at the same time the torque which is made available by the electric machine (2) is adapted in order to keep the torque which is effective at the output (4) constant;
b) subsequently the lock-up shift element (12) is disengaged;
c) after this the second part transmission (7) is synchronized to a gear speed which matches the velocity, using the electric machine (2), and after synchronization this gear speed is engaged in the second part transmission (7);
d) subsequently load is increased at the electric machine (2) and load is reduced at the clutch (11) while keeping the torque which is effective at the output (4) constant, specifically in such a way that no power flows via the first part transmission (6) anymore, wherein the gear speed of the first part transmission (6) is then disengaged;
e) after this the slip at the clutch (11) is reduced by lowering the rotational speed of the electric machine (2), wherein at the same time the rotational speed of the internal combustion engine (1) is adapted; and
f) subsequently the clutch (11) is closed.

5. Method according to Claim 1 or 2, **characterized in that** a positively locking or frictionally locking lock-up shift element (12) interacts with the planetary gear mechanism (10) in such a way that when the lock-up shift element (12) is closed a rotationally fixed connection is present between the electric machine (2) and the two input shafts (8, 9) of the two part transmissions (6, 7) and therefore obligatory equality of rotational speed is present between said input shafts (8, 9), whereas when the lock-up shift element (12) is opened this rotationally fixed connection is not present between the electric machine (2) and the two input shafts (8, 9) of the two part transmissions (6, 7) and therefore the obligatory equality of rotational speed is not present, and **in that** when a gear speed is engaged in the second part transmission (7) during purely electric travel when the first part transmission (6) is in neutral and when the clutch (11) is opened and the lock-up shift element (12) is closed, the following steps are carried out in order to couple the internal combustion engine (1) to the output (4) :
a) firstly the clutch (11) is placed in a slipping state in order to relieve the lock-up shift element (12) by means of the torque which is transmitted by said clutch (11), wherein at the same time the torque which is made available by the electric machine (2) is adapted in order to keep the torque which is effective at the output (4) constant;
b) subsequently the lock-up shift element (12) is disengaged;
c) after this the first part transmission (6) is synchronized to a gear speed which matches the velocity, using the electric machine (2), and after synchronization this gear speed is engaged in the first part transmission (6), wherein at the same time the rotational speed of the internal combustion engine (1) is adapted to the gear speed which matches the velocity; and
d) subsequently the clutch (11) is closed.

## Revendications

1. Procédé de conduite d'une unité d'entraînement pour véhicule hybride, l'unité d'entraînement comportant un ensemble d'entraînement (3) qui présente un moteur (1) à combustion interne, une machine électrique (2) et une transmission (5) présentant plusieurs transmissions partielles (6, 7) entre l'ensemble d'entraînement (3) et un ensemble entraîné (4),
la machine électrique (2) étant accouplée par l'intermédiaire d'une transmission (10) à planétaires à une arbre d'entrée (8) d'une première transmission partielle (6) et un arbre d'entrée (9) d'une deuxième transmission partielle (7) étant accouplé en parallèle à la première transmission partielle (6),
le moteur (1) à combustion interne étant accouplé par un embrayage de séparation (11) à frottement à l'arbre d'entrée (8) de la première transmission partielle (6) et, lorsque l'embrayage de séparation (11) est fermé, étant accouplé conjointement avec l'arbre d'entrée (8) de la première transmission partielle (6) au même élément (15) de la transmission (10) à planétaires,
tandis que pour désaccoupler le moteur (1) à combustion interne de l'ensemble entraîné (4) en partant d'une conduite purement électrique, le couple délivré par le moteur (1) à combustion interne est transmis par l'intermédiaire de l'embrayage de séparation (11) fonctionnant en patinage pour délester un élément de changement de rapport préalablement fermé lors de la conduite purement électrique et le désengager à l'état délesté,
**caractérisé en ce que**
l'embrayage de séparation (11) précédemment ouvert lors de la conduite purement électrique est amené en patinage pour délester l'élément de commutation à délester et
**en ce qu'**après le désengagement de l'élément de commutation précédemment fermé et délesté à l'aide de l'embrayage de séparation (11) utilisé en patinage, l'embrayage de séparation (11) est fermé pour interrompre le patinage sur cet embrayage.

2. Procédé selon la revendication 1, **caractérisé en ce qu'**après la fermeture de l'embrayage de séparation (11), un changement de rapport en charge est réalisé dans la transmission (5) sans interruption de la force de traction appliquée sur l'ensemble entraîné (4) pour engager un rapport de transmission adapté à la vitesse de roulage du moteur (1) à combustion interne.

3. Procédé selon les revendications 1 ou 2, **caractérisé en ce qu'**un rapport de transmission est engagé dans les deux transmissions partielles (6, 7) en conduite purement électrique et **en ce que** si l'embrayage de séparation (11) ainsi que l'élément (12) de changement de rapport de pontage de préférence présent sont ouverts, les étapes suivantes sont réalisées sur l'ensemble entraîné (4) en vue d'accoupler le moteur (1) à combustion interne :
a) tout d'abord, l'embrayage de séparation (11) est mis en patinage pour délester un élément (13) de changement de rapport à désengager dans une des deux transmissions partielles par l'intermédiaire du couple transmis, et en même temps le couple délivré par la machine électrique (2) est adapté pour maintenir constant le couple agissant sur l'ensemble entraîné (4),
b) ensuite, l'élément (13) de changement de rapport délesté est désengagé dans une des deux transmissions partielles,
c) ensuite, le patinage sur l'embrayage (11) de séparation est supprimé en abaissant la vitesse de rotation de la machine électrique (2) tout en adaptant la vitesse de rotation du moteur (1) à combustion interne et
d) l'embrayage de séparation (11) est ensuite fermé.

4. Procédé selon les revendications 1 ou 2, **caractérisé en ce qu'**un élément (12) de changement de rapport de pontage coopère en correspondance géométrique ou par frottement avec la transmission (10) à planétaires, **en ce que** lorsque l'élément (12) de changement de rapport de pontage est fermé, une liaison à rotation solidaire est établie entre la machine électrique (2) et les deux arbres d'entrée (8, 9) des deux transmissions partielles (6, 7) et ainsi une égalité forcée des vitesses de rotation est établie alors que lorsque l'élément (12) de changement de rapport de pontage, cette liaison à rotation solidaire entre la machine électrique (2) et les deux arbres d'entrée (8, 9) des deux transmissions partielles (6, 7) est absente et donc l'égalité forcée des vitesses de rotation n'est pas établie, et **en ce que** lorsqu'en conduite purement électrique, un rapport de transmission est engagé dans la première transmission partielle (6) alors que la deuxième transmission partielle (7) se trouve en position neutre, que l'embrayage de séparation (11) est ouvert et que l'élément (12) de changement de rapport de pontage est fermé, les étapes suivantes sont exécutées pour accoupler le moteur (1) à combustion interne à l'ensemble entraîné (4) :
a) tout d'abord, l'embrayage de séparation (11) est mis en patinage pour délester l'élément (12) de changement de rapport de pontage par l'intermédiaire du couple transmis par cet embrayage, et en même temps le couple délivré par la machine électrique (2) est adapté pour maintenir constant le couple appliqué sur l'ensemble entraîné (4),
b) ensuite, l'élément (12) de changement de rapport de pontage est désengagé,
c) ensuite, la deuxième transmission partielle (7) est synchronisée à l'aide de la machine électrique (2) sur un rapport adapté à la vitesse de roulage et, après synchronisation, ce rapport est engagé dans la deuxième transmission partielle (7),
d) ensuite, la machine électrique (2) est délestée de sa charge et la charge appliquée sur l'embrayage de séparation (11) en maintenant constant le couple agissant sur l'ensemble entraîné (4) est délesté par le fait qu'aucune puissance n'est plus transmise par la première transmission partielle (6), le rapport de la première transmission partielle (6) étant désengagé,
e) ensuite, le patinage sur l'embrayage de séparation (11) est supprimé par abaissement de la vitesse de rotation de la machine électrique (2) tout en adaptant la vitesse de rotation du moteur (1) à combustion interne et
f) ensuite, l'embrayage de séparation (11) est fermé.

5. Procédé selon les revendications 1 ou 2, **caractérisé en ce qu'**un élément (12) de changement de rapport de pontage coopère en correspondance géométrique ou par frottement avec la transmission (10) à planétaires, **en ce que** lorsque l'élément (12) de changement de rapport de pontage est fermé, une liaison à rotation solidaire est établie entre la machine électrique (2) et les deux arbres d'entrée (8, 9) des deux transmissions partielles (6, 7) et ainsi une égalité forcée des vitesses de rotation est établie alors que lorsque l'élément (12) de changement de rapport de pontage, cette liaison à rotation solidaire entre la machine électrique (2) et les deux arbres d'entrée (8, 9) des deux transmissions partielles (6, 7) est absente et donc l'égalité forcée des vitesses de rotation n'est pas établie, et **en ce que** lorsqu'en conduite purement électrique, un rapport est engagé dans la deuxième transmission partielle (7) pendant que la première transmission partielle (6) est en position neutre, que l'embrayage de séparation (11) est ouvert et que l'élément (12) de changement de rapport de pontage est fermé, les étapes suivantes sont réalisées pour accoupler le moteur (1) à combustion interne à l'ensemble entraîné (4) :
a) tout d'abord, l'embrayage de séparation (11) est mis en patinage pour délester l'élément (12) de changement de rapport de pontage par l'intermédiaire du couple transmis par cet embrayage, et en même temps le couple délivré par la machine électrique (2) est adapté pour maintenir constant le couple appliqué sur l'ensemble entraîné (4),
b) ensuite, l'élément (12) de changement de rapport de pontage est désengagé,
c) ensuite, la première transmission partielle (6) est synchronisée à l'aide de la machine électrique (2) sur un rapport adapté à la vitesse de roulage et, après synchronisation, ce rapport est engagé dans la première transmission partielle (6), la vitesse de rotation du moteur (1) à combustion interne étant en même temps adaptée au rapport adapté à la vitesse de roulage et
d) ensuite, l'embrayage de séparation (11) est fermé.
